# EUROPÄISCHE PATENTANMELDUNG

(11) **EP 1 103 495 A1**
(43) Veröffentlichungstag der Anmeldung: **30.05.2001**
(21) Anmeldenummer: 00119797.9
(22) Anmeldetag: 12.09.2000
(51) Int. Cl.: B65G 13/073, B65H 27/00

(54) **Friktionsrolle für Friktionsförderer**

(30) Priorität: 24.11.1999 DE 29920618 U
(71) Anmelder: Holzma-Maschinenbau GmbH, 75365 Calw-Holzbronn (DE)
(72) Erfinder: Kempf, Martin, 72202 Nagold (DE); Trebing, Immo, 75391 Gechingen (DE)
(74) Vertreter: Dreiss, Fuhlendorf, Steimle & Becker

(57) **Zusammenfassung**

Die Erfindung betrifft eine Friktionsrolle (10) für Friktionsförderer, mit einem auf einer angetriebenen Fördererwelle (12) frei drehbar angeordneten Rollenkörper (14) aus Kunststoff, wobei der Rollenkörper (14) eine aus elastischem, rutschfestem Material bestehende, in Rollenachsrichtung festgelegte Umreifung (16) aufweist.

## Beschreibung

Die Erfindung betrifft eine Friktionsrolle für Friktionsförderer mit einem auf einer angetriebenen Fördererwelle frei drehbar angeordneten Rollenkörper aus Kunststoff.

Solche Friktionsrollen sind üblicherweise in einer großen Anzahl nebeneinander auf einer während des Betriebes eines Friktionsförderers permanent rotierenden Fördererwelle gelagert, wobei sie sich durch Reibungsschluss mit der Fördererwelle mitdrehen.

Werden auf solchen Friktionsförderern Gegenstände für einen Transport abgelegt, erhöht sich bei den mit diesen Gegenständen belasteten Friktionsrollen der Reibungsschluss mit der rotierenden Fördererwelle, so dass eine zuverlässige Materialmitnahme gewährleistet ist.

Solche Friktionsrollen tragende Fördererwellen können, je nach Größe und/oder Anzahl von zu förderndem Gut relativ lang sein, so dass, in Förderrichtung gesehen, gleichzeitig mehrere Gegenstände nebeneinander auf dem Friktionsförderer abgelegt werden können.

Friktionsförderer mit solchen rollenbestückten Fördererwellen werden beispielsweise Plattenaufteilanlagen nachgeschaltet, um Stapel von auf unterschiedliche Maße zugeschnittenen Fertigformaten von Platten zu übernehmen und diese beispielsweise zum gemeinsamen Ausrichten gegen einen Anschlag zu fördern.

Dabei kann es vorkommen, dass Friktionsrollen auch dann weiter rotieren, nachdem Plattenzuschnitte am Anschlag angelangt sind. Dies ist häufig dann der Fall, wenn es sich um kaschiertes Plattenmaterial mit sehr glatter Oberfläche seiner Flachseiten handelt. In diesem Falle kann die Reibungskraft zwischen der Umfangsfläche der Fördererwelle und der Innenumfangsfläche der Friktionsrolle gegenüber derjenigen zwischen deren glatten Außenumfangsfläche ihres aus Kunststoff bestehenden Rollenkörpers und der auf ihr aufruhenden Materialflachseite überwiegen. Infolge dessen können an der unteren Flachseite von aufliegenden Werkstückplatten durch Rotieren von Friktionsrollen sog. Glanzspuren entstehen, durch welche solche Teile unbrauchbar werden.

Die Erfindung befasst sich nun mit einer Weiterbildung von Friktionsrollen der eingangs erläuterten Art, die das Entstehen von Glanzspuren verhindert.

Erfindungsgemäß wird dies dadurch erreicht, dass der Rollenkörper eine aus elastischem, rutschfestem Material bestehende, in Rollenachsrichtung festgelegte Umreifung aufweist.

Diese Umreifung schafft zwischen Friktionsrolle und Fördergut einen Reibungswiderstand, der um ein Vielfaches größer ist, als der aus dem Moment der Rollreibung zwischen Fördererwelle und der Reibzahl des Kunststoffes des Rollenkörpers an dessen Innenumfang resultierende Rollwiderstand, so dass bei angehaltenem Fördergut die durch dasselbe belasteten Friktionsrollen sich nicht mehr weiterdrehen werden.

Als Materialien für die Umfreifung eignet sich besonders Kunststoff, wie ? (bitte ergänzen) oder Gummi. Die Umreifung kann dabei den Außenumfang des Rollenkörpers im Wesentlichen ganz abdecken oder diese kann in Achsrichtung des Rollenkörpers in Abschnitte aufgeteilt sein.

Im ersteren Falle ergibt sich eine vorteilhafte Konstruktion, wenn die Umreifung durch wenigstens einen in einer Umfangsnut des Rollenkörpers angeordneten und über die Nutwände überstehenden Schrumpfschlauch gebildet ist. Im zweiten Falle ist es günstig, die Umreifung durch eine Vielzahl von Reibringen zu bilden, die mit im Achsabstand voneinander vorgesehenen Umfangsnuten des Rollenkörpers in Eingriff sind, wobei sich fertigungstechnisch insofern ein wesentlicher Vorteil ergibt, als handelsübliche 0-Ringe als Reibringe verwendet werden können.

Die Umreifung in Form wenigstens eines Schrumpfschlauches oder in Form einer Vielzahl von Reibringen bietet den wesentlichen Vorteil, dass bei schrägem Anfördern von glattem Material auf den Friktionsförderer Plattenkanten nicht seitlich an die Umreifung über deren gesamte Höhe anstoßen und sie dadurch aufbiegen und ggf. aufsplittern können; vielmehr bilden die die Umreifung seitlich zu einem wesentlichen Teil radial überdeckenden Nutwände einerseits hiergegen einen wirksamen Anlaufschutz, und andererseits verhindern diese, dass sich die Umreifung, bedingt durch schräg anlaufendes Fördergut, durch Walkeffekte auf dem Rollenkörper in axialer Richtung verlagern kann.

In der Zeichnung sind Ausführungsbeispiele der Erfindung dargestellt. Es zeigen:

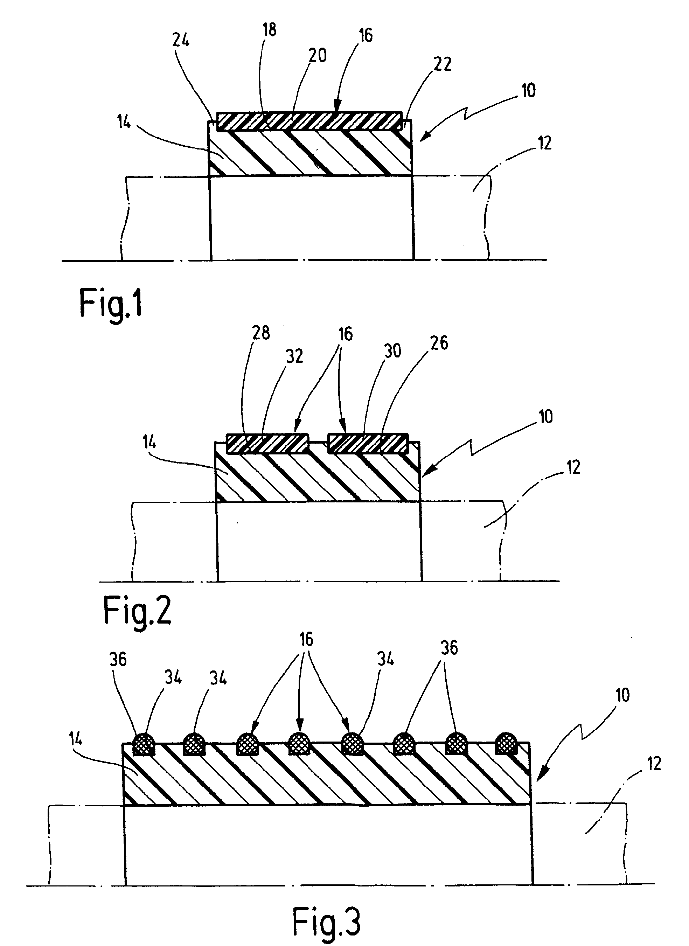

- Figuren 1 - 3: jeweils Teillängsschnitte von Friktionsrollen.

Bei den gezeigten Ausführungsbeispielen bezeichnet 10 als Ganzes jeweils eine Friktionsrolle, die zur Anordnung auf einer strichpunktiert angedeuteten, horizontal gelagerten und während des Betriebs des Friktionsförderers permanent rotierenden Fördererwelle 12 zusammen mit einer Vielzahl weiterer, gleicher Friktionsrollen frei drehbar gelagert ist.

Mit 14 ist ein aus Kunststoff bestehender rotationssymmetrischer Rollenkörper bezeichnet, der am Außenumfang eine einen großen Rollwiderstand schaffende Umreifung 16 trägt.

Beim Ausführungsbeispiel gemäß Figur 1 ist diese Umreifung 16 durch einen in eine Umfangsnut 18 eingebrachten, vorzugsweise aus Kunststoff bestehenden Schrumpfschlauch 20 gebildet, der somit den Mantel des Rollenkörpers 14 weitgehend überdeckt und über die Umfangsnut 18 begrenzende Umfangsbunde 22 und 24 radial vorsteht.

Bei den Ausführungsbeispielen gemäß Figur 2 und 3 ist die Ummantelung 16 aufgegliedert. Bei der Konstruktion gemäß Figur 2 sind außenumfangsseitig in den Rollenkörper 14 in seitlichem Abstand voneinander lediglich zwei Umfangsnuten 26 und 28 eingeformt, in die jeweils ein Reibbelag in Form eines Schrumpfschlauches 30 bzw. 32 aus Kunststoff eingebracht ist.

Das Ausführungsbeispiel gemäß Figur 3 zeigt eine Friktionsrolle 10 mit im Vergleich zu den oben erläuterten Rollenkonstruktionen größerer Länge. In den Mantel des Rollenkörpers 14 sind in vorzugsweise gleichmäßigem seitlichen Abstand Umfangsnuten 34 eingeformt, die jeweils einen handelsüblichen, über den Umfang des Rollenkörpers 14 vorstehenden O-Ring 36 aufnehmen.

## Patentansprüche

1. Friktionsrolle (10) für Friktionsförderer, mit einem auf einer angetriebenen Fördererwelle (12) frei drehbar angeordneten Rollenkörper (14) aus Kunststoff, dadurch gekennzeichnet, dass der Rollenkörper (14) eine aus elastischem, rutschfestem Material bestehende, in Rollenachsrichtung festgelegte Umreifung (16) aufweist.

2. Friktionsrolle nach Anspruch 1, dadurch gekennzeichnet, dass die Umreifung (16) aus Kunststoff besteht.

3. Friktionsrolle nach Anspruch 1, dadurch gekennzeichnet, dass die Umreifung (16) aus Gummi besteht.

4. Friktionsrolle nach einem der vorhergehenden Ansprüche, dadurch gekennzeichet, dass die Umreifung (16) durch wenigstens einen in einer Umfangsnut des Rollenkörpers (14) angeordneten und über die Nutwände (22, 24) überstehenden zylindrischen Schrumpfschlauch (20 bzw. 30, 32) gebildet ist.

5. Friktionsrolle nach einem der vorhergehenden Ansprüche 1 - 3, dadurch gekennzeichnet, dass die Umreifung (16) durch eine Vielzahl von Reibringen (36) gebildet ist, die mit in seitlichem Abstand voneinander vorgesehenen Umfangsnuten (34) des Rollenkörpers (14) in Eingriff sind.

6. Friktionsrolle nach Anspruch 5, dadurch gekennzeichnet, dass die Reibringe (36) 0-Ringe sind .
